# EUROPÄISCHE PATENTSCHRIFT

(11) **EP 3 284 672 B1**
(45) Veröffentlichungstag und Bekanntmachung des Hinweises auf die Patenterteilung: **26.06.2019**
(21) Anmeldenummer: 16184427.9
(22) Anmeldetag: 17.08.2016
(51) Int. Cl.: B64C 27/605, B64D 41/00

(54) **TAUMELSCHEIBENSYSTEM UND ROTORSYSTEM FÜR EINEN HELIKOPTER**
SWASHPLATE SYSTEM AND ROTOR SYSTEM FOR A HELICOPTER
SYSTEME A PLATEAU CYCLIQUE ET SYSTEME DE ROTOR D'HELICOPTÈRE

(43) Veröffentlichungstag der Anmeldung: 21.02.2018
(73) Patentinhaber: Airbus Defence and Space GmbH, 82024 Taufkirchen (DE)
(72) Erfinder: NEUBAUER, Frank, 85591 Vaterstetten (DE); BECKER, Thomas, 27711 Osterholz-Scharmbeck (DE)
(74) Vertreter: Isarpatent

(56) Entgegenhaltungen:
- WO-A1-2011/119458
- GB-A- 2 032 374
- US-A1- 2013 140 649
- US-A9- 2010 044 505

## Beschreibung

Die vorliegende Erfindung betrifft ein Taumelscheibensystem für einen Helikopter und ein Rotorsystem für einen Helikopter.

Eine Taumelscheibe eines Helikopters dient der mechanischen Übertragung von Steuerbewegungen von Aktuatoren auf den Rotor des Helikopters. Taumelscheiben weisen üblicherweise einen sich mit dem Rotor drehenden Teil und einen stationären Teil auf.

Moderne Helikopter weisen eine Vielzahl von elektrisch betriebenen Komponenten auf, wie beispielsweise Beleuchtungseinrichtungen, Sensoren, Steuerungseinrichtungen oder dergleichen. Üblicherweise werden auch in mit elektrischen Versorgungsleitungen schlecht erreichbaren Bereichen des Helikopters elektrische Komponenten benötigt. Hierzu ist insbesondere an rotierenden Bauteilen, wie z.B. dem Rotor, zur Versorgung elektrisch betriebener Komponenten mit elektrischer Energie üblicherweise eine lokale Energieerzeugungsvorrichtung vorgesehen.

Die WO 2011/119458 A1 offenbart eine Energieerzeugungsvorrichtung für einen Helikopter mit einer an einem rotierenden Teil einer Taumelscheibe eines Rotors des Helikopters angeordneten Induktionsspule und einer an einem feststehenden Teil der Taumelscheibe angeordneten Permanentmagneten. Durch die Bewegung der Spule mit dem rotierenden Teil der Taumelplatte durch das Magnetfeld des Permanentmagneten wird eine Spannung in der Spule induziert, welche zur Versorgung von an dem Rotor angeordneten Komponenten genutzt werden kann. Eine platzsparende Ausführungsform sieht vor, die Spule in den Querschnitt des rotierenden Teils der Taumelscheibe zu integrieren.

Es ist eine der Aufgaben der vorliegenden Erfindung ein Taumelscheibensystem für einen Helikopter bereitzustellen, welche eine verbesserte Energieerzeugungsvorrichtung aufweist.

Diese Aufgabe wird jeweils durch den Gegenstand des unabhängigen Anspruchs 1 sowie des abhängigen Anspruchs 12 gelöst.

Ausgestaltungen und Weiterbildungen sind in den auf die unabhängigen Ansprüche rückbezogenen Unteransprüchen angegeben.

Nach einem ersten Aspekt der Erfindung ist ein Taumelscheibensystem für einen Helikopter nach Anspruch 1 vorgesehen. Das Taumelscheibensystem weist eine Taumelscheibe mit einer ersten Scheibe und einer um eine Rotationsachse drehbar an der ersten Scheibe gelagerten zweiten Scheibe auf. Weiterhin weist das Taumelscheibensystem eine Energieerzeugungsvorrichtung mit zumindest einer an einer ersten Oberfläche der ersten Scheibe angeordneten Magneteinrichtung und zumindest einer an einer der ersten Oberfläche der ersten Scheibe zugewandten zweiten Oberfläche der zweiten Scheibe angeordneten Induktionsspuleneinrichtung auf.

Das Taumelscheibensystem weist demnach eine Taumelscheibe mit einer stationären ersten Scheibe und einer rotierenden zweiten Scheibe sowie eine elektrische Energieerzeugungsvorrichtung bzw. einen Generator auf. Die Energieerzeugungsvorrichtung umfasst eine ein Magnetfeld erzeugende Magneteinrichtung und eine Induktionsspuleneinrichtung. Die Magneteinrichtung ist auf der stationären ersten Scheibe und die Induktionsspuleneinrichtung an der rotierenden zweiten Scheibe angeordnet. Hierbei sind die Magneteinrichtung und die Induktionsspuleneinrichtung an einander zugewandten Oberflächen der ersten bzw. der zweiten Scheibe angeordnet. Durch die rotierende Bewegung der zweiten Scheibe wird die Induktionsspuleneinrichtung damit durch das Magnetfeld der Induktionsspuleneinrichtung bewegt. Dadurch wird eine Spannung in der Induktionsspuleneinrichtung induziert, welche zur Energieversorgung elektrisch betriebener Funktionskomponenten genutzt werden kann. Insbesondere sind die Magneteinrichtung und die Induktionsspuleneinrichtung als Dünnschichtbauelemente, gedruckte elektronische Bauelemente oder als Siebdruckbauelemente , also in Form von direkt auf einen Träger aufgebrachten bzw. auf diesem hergestellten Schaltungen, ausgebildet. Dadurch kann die Energieerzeugungsvorrichtung besonders flach und damit platzsparend ausgebildet werden. Dies ist insbesondere vorteilhaft, wenn die Energieerzeugungsvorrichtung an eine Taumelscheibe nachgerüstet werden soll. Durch den flachen Aufbau kann die Montage direkt an einer Oberfläche der Scheiben der Taumelscheibe erfolgen. Auf diese Weise wird die Einbringung von die mechanische Festigkeit der Scheiben verringernden Ausnehmungen vorteilhaft vermieden. Ein weiterer Vorteil der Dünnschichtbauelemente, gedruckten elektronischen Bauelemente oder Siebdruckbauelemente liegt in deren einfacher und günstiger Herstellbarkeit.

Die Dünnschichtbauelemente, gedruckten elektronischen Bauelemente oder Siebdruckbauelemente können insbesondere direkt auf einer Oberfläche der ersten bzw. der zweiten Scheibe des Taumelscheibensystems hergestellt werden. Dies bietet den Vorteil eines äußerst geringen Bauraumbedarfs. Gleichzeitig wird das Einbringen von die mechanische Stabilität der Scheiben verringernden Kerben vermieden. Besonders bevorzugt werden die Bauelemente jedoch als separate Komponenten bereitgestellt, welche an der ersten bzw. der zweiten Scheibe befestigt sind, beispielsweise mit dieser verklebt, verschweißt, verschraubt, vernietet oder dergleichen. Dieser hybride Aufbau bietet den Vorteil, dass der Fertigungsaufwand für die Energieerzeugungsvorrichtung sehr gering ist. Weiterhin kann die Energieerzeugungsvorrichtung auf einfache und zuverlässige Weise montiert werden.

Die gedruckten elektronischen Bauelemente und die Siebdruckbauelemente können insbesondere als Dickschichtbauelemente ausgeführt sein. Diese weisen typischerweise Schaltungen mit einer räumlichen Auflösung in einem Bereich zwischen 15 µm und wenigen Millimetern, beispielsweise 2 mm, auf. Dünnschichtbauelemente weisen typischerweise Schaltungen mit einer räumlichen Auflösung in einem Bereich zwischen 50 nm und und kleiner 15 µm auf.

Gemäß der Erfindung ist vorgesehen, dass die zumindest eine Induktionsspuleneinrichtung eine Spulenleiterbahn und eine zwischen der Spulenleiterbahn und der zweiten Oberfläche der zweiten Scheibe gelegene erste Isolationsschicht aufweist. Die Isolationsschicht bildet einen Träger, auf dem die als Leiterbahn ausgebildeten Spulenwicklungen angeordnet sind. Ein derartiger Aufbau der Induktionsspuleneinrichtung lässt sich auf einfache Weise mit geringer Bauhöhe herstellen. Weiterhin wird dadurch ein hybrider Aufbau möglich, bei dem die Induktionsspuleneinrichtung als separates Bauteil hergestellt und an der zweiten Scheibe montiert ist.

Bevorzugt erstreckt sich die Spulenleiterbahn in einem spiralförmigen Muster entlang der ersten Isolationsschicht. Durch ein spiralförmiges Muster können die Wicklungen der Spule in besonders platzsparender Weise ausgebildet werden. Das spiralförmige Muster kann insbesondere durch abschnittsweise gerade verlaufende Abschnitte der Spulenleiterbahn, welche durch gekrümmt verlaufende Abschnitte der Spulenleiterbahn verbunden sind, ausgebildet sein. Auch können die gerade verlaufenden Abschnitte direkt miteinander verbunden sein. Weiterhin kann das spiralförmige Muster beispielsweise annähernd die Form einer archimedischen Spirale aufweisen.

Gemäß einer vorteilhaften Weiterbildung weist die Induktionsspuleneinrichtung eine im Zentrum des spiralförmigen Musters angeordnete erste Ferritkernschicht auf. Damit wird vorteilhaft die Induktivität der Spule vergrößert. Die Anordnung im Zentrum ermöglicht zusätzlich einen kompakten, platzsparenden Aufbau. Das Zentrum kann insbesondere durch einen zwischen gegenüberliegenden Spulenleiterbahn-Abschnitten ausgebildeten Freiraum definiert sein.

Weiterhin kann vorgesehen sein, dass die Induktionsspuleneinrichtung eine die Spulenleiterbahn umschließende zweite Ferritkernbahn aufweist. Dadurch wird die Induktivität der Spule ebenfalls vorteilhaft vergrößert. Die zweite Ferritkernbahn bildet insbesondere eine geschlossene Bahn, welche entlang der ersten Isolationsschicht um einen Außenumfang der Spulenleiterbahn verläuft.

Gemäß einer weiteren vorteilhaften Weiterbildung ist vorgesehen, dass die Induktionsspuleneinrichtung eine zwischen der Spulenleiterbahn und der ersten Isolationsschicht angeordnete dritte Ferritkernschicht aufweist, wobei zwischen der dritten Ferritkernschicht und der Spulenleiterbahn eine zweite Isolationsschicht angeordnet ist. Durch die flächige Anordnung der dritten Ferritkernschicht unterhalb der Spulenleiterbahn kann die Induktivität der Spule auf besonders platzsparende Weise erhöht werden. Weiterhin erfolgt dadurch eine vorteilhafte Führung der Feldlinien.

Bevorzugt ist die Spulenleiterbahn durch ein CVD-Verfahren oder ein PVD-Verfahren hergestellt ist. "CVD" steht hierbei als Abkürzung für den englischen Ausdruck "Chemical Vapour Deposition". Hierbei wird aufgrund einer chemischen Reaktion an einer erhitzten Oberfläche eines Substrates aus der Gasphase eine Feststoffkomponente abgeschieden. Insbesondere wird das die Spulenleiterbahn bildende Material abgeschieden, beispielsweise an der Oberfläche der ersten oder der zweiten Isolierschicht. Weiterhin steht "PVD" als Abkürzung für den englischen Ausdruck "Physical Vapour Deposition". Bei diesem Verfahren wird das die Spulenleiterbahn bildende Material an einer Oberflächen, insbesondere der ersten oder der zweiten Isolierschicht, kondensiert. Diese Verfahren bieten den Vorteil, dass die Spulenleiterbahn mit hoher Präzision hergestellt ist. Dadurch wird die Induktivität mit hoher Genauigkeit festgelegt. Die vorgenannten Verfahren eignen sich insbesondere zur Herstellung von Dünnschichtbauelementen. Zur Herstellung von Dickschichtbauelementen, insbesondere zur Herstellung der Siebdruckbauelemente, kann ein Siebdruckverfahren verwendet werden. Zur Herstellung von gedruckten elektronischen Bauelementen können generell auftragende Verfahren, wie z.B. Tintenstrahldruckverfahren, Tief-, Offset-, Flexodruckverfahren, eingesetzt werden. Diese Verfahren bieten den Vorteil, dass die gedruckten elektronischen Bauelemente besonders schnell und mit relativ geringem technischen Aufwand herstellbar sind.

Die Spulenleiterbahn kann insbesondere aus Kupfer, Aluminium oder Legierungen hiervon gebildet sein.

Weiterhin kann die Induktionsspuleneinrichtung vorteilhaft eine die Spulenleiterbahn einbettende Schutzschicht aufweisen. Die Schutzschicht dient dem Schutz der Spulenleiterbahn vor Korrosion und ungewollten elektrischen Kontaktierungen der einzelnen die Spulenleiterbahn bildenden Abschnitte, z.B. infolge von Feuchtigkeit. Die Schutzschicht umgibt hierzu die von der ersten oder der zweiten Isolationschicht vorspringenden Bereiche der Spulenleiterbahn.

Die Schutzschicht kann insbesondere aus einem Keramikmaterial, bevorzugt einem Siliziumoxidmaterial, einem Siliziumnitridmaterial, einem Aluminiumoxidmaterial oder dergleichen ausgebildet sein.

Nach einer bevorzugten Ausführungsform des Taumelscheibensystems weist die Magneteinrichtung eine Permanentmagnetschicht auf. Die Magneteinrichtung ist demnach als eine Schicht aus einem permanentmagnetischen Material ausgebildet. Hierbei ergibt sich der Vorteil eines äußerst einfachen Aufbaus der Magneteinrichtung. Aufgrund des schichtförmigen Aufbaus wird vorteilhaft eine flache, platzsparende Energieerzeugungsvorrichtung geschaffen.

Die Permanentmagnetschicht kann insbesondere Kupfer, Nickel, Eisen, Titan, Cobalt, Samarium oder dergleichen sowie Mischungen hiervon aufweisen. Diese Materialien weisen sehr gute magnetische Eigenschaften auf. Damit kann ein starkes Magnetfeld mit geringem Materialaufwand und damit niedrigem Gewicht erzeugt werden.

Bevorzugt ist die Permanentmagnetschicht durch ein CVD-Verfahren oder ein PVD-Verfahren oder ein Siebdruckverfahren oder ein auftragendes Verfahren hergestellt. In Bezug auf die Vorteile wird auf die obigen Ausführungen verwiesen.

Die Permanentmagnetschicht ist bevorzugt als eine sich flächig erstreckende Materialschicht ausgebildet. Insbesondere kann die Permanentmagnetschicht eine größere flächige Erstreckung aufweisen als die Induktionsspuleneinrichtung. Dies bietet den Vorteil, dass in einem relativ großen Flächenbereich ein Magnetfeld erzeugt wird, durch welches die Induktionsspuleneinrichtung hindurch bewegbar ist. Damit kann die Positionierung der Induktionsspuleneinrichtung auf der zweiten Scheibe und/oder der Permanentmagnetschicht auf der ersten Scheibe mit größerer Toleranz erfolgen.

Gemäß einer vorteilhaften Weiterbildung ist vorgesehen, dass die Magneteinrichtung eine zwischen der ersten Oberfläche der ersten Scheibe und der Permanentmagnetschicht angeordnete Magnetisolationsschicht aufweist. Die Permanentmagnetschicht ist demnach auf einer ersten Oberfläche der Magnetisolationsschicht angeordnet und die Magnetisolationsschicht bildet einen Träger für die Permanentmagnetschicht. Dadurch wird vorteilhaft die Korrosionsgefahr an der ersten Oberfläche der ersten Scheibe verringert. Weiterhin erlaubt dieser Aufbau vorteilhaft die Ausbildung der Magneteinrichtung als separates Bauteil, welches an der ersten Scheibe befestigt ist.

Alternativ zu der Ausbildung der Magneteinrichtung als Permanentmagnetschicht, kann die Magneteinrichtung als eine Induktionsspuleneinrichtung gemäß einer der voranstehenden Ausführungsformen ausgebildet sein. Demnach ist als Magneteinrichtung ein Elektromagnet vorgesehen. Dies bietet den Vorteil, dass das die Stärke des Magnetfelds variabel einstellbar und insbesondere ein- oder ausschaltbar ist.

Bei dieser Ausführungsform ist insbesondere eine Magnetspulenleiterbahn und eine zwischen der Magnetspulenleiterbahn und der ersten Oberfläche der ersten Scheibe gelegene erste Magnetisolationsschicht vorgesehen. Die Magnetisolationsschicht bildet insbesondere einen Träger, auf dem die als Leiterbahn ausgebildeten Spulenwicklungen angeordnet sind. Bevorzugt erstreckt sich die Magnetspulenleiterbahn in einem spiralförmigen Muster entlang der ersten Magnetisolationsschicht. Vorteilhaft kann im Zentrum des spiralförmigen Musters eine erste Magnet-Ferritkernschicht angeordnet sein. Weiterhin kann vorgesehen sein, dass die Magneteinrichtung eine die Magnetspulenleiterbahn umschließende zweite Magnet-Ferritkernbahn aufweist. Auch kann vorgesehen sein, dass die Magneteinrichtung eine sich zwischen der Magnetspulenleiterbahn und der ersten Magnet-Isolationsschicht erstreckende dritte Magnet-Ferritkernschicht aufweist, wobei zwischen der dritten Magnet-Ferritkernschicht und der Magnetspulenleiterbahn eine zweite Magnet-Isolationsschicht angeordnet ist. In Bezug auf die Vorteile der einzelnen Ausgestaltungen auf die obigen Ausführungen zur Spulenleiterbahn der Induktionsspuleneinrichtung verwiesen. Bevorzugt ist die Magnetspulenleiterbahn ebenfalls durch ein CVD-Verfahren oder ein PVD-Verfahren oder ein Siebdruckverfahren oder ein auftragendes Verfahren hergestellt. In Bezug auf die Vorteile wird auf die obigen Ausführungen verwiesen. Auch kann die Magnetspulenleiterbahn aus den in Bezug auf die Spulenleiterbahn der Induktionsspuleneinrichtung offenbarten Materialien gebildet sein.

Gemäß einem zweiten Aspekt der Erfindung ist ein Rotorsystem für einen Helikopter vorgesehen. Das Rotorsystem weist ein Taumelscheibensystem nach einer der voranstehend beschriebenen Ausführungsformen auf. Weiterhin weist das Rotorsystem einen um die Rotationsachse rotierbaren Rotorschaft auf, wobei die zweite Scheibe des Taumelscheibensystems mit dem Rotorschaft mitrotierend verbunden ist. Außerdem sind mehrere mit dem Rotorschaft rotierende Rotorkomponenten vorgesehen. Zusätzlich weist das Taumelscheibensystem zumindest eine an einer der Rotorkomponenten angeordnete und elektrisch betreibbare Funktionskomponente auf, welche elektrisch mit der Induktionsspuleneinrichtung des Taumelscheibensystems verbunden ist.

Das erfindungsgemäße Rotorsystem umfasst demnach das oben beschriebene Taumelscheibensystem, wobei die erste Scheibe einen stationären Teil der Taumelscheibe und die zweite Scheibe einen rotierenden Teil der Taumelscheibe bildet. Die zweite Scheibe rotiert insbesondere mit dem Rotorschaft, das heißt, eine Rotation des Rotorschafts um die Rotationsachse bewirkt eine Rotation der zweiten Scheibe. Insbesondere ist die zweite Scheibe kinematisch an den Rotorschaft gekoppelt. Weiterhin weist das Rotorsystem mehrere Rotorkomponenten auf, welche durch den Rotorschaft in eine um die Rotationsachse rotierende Bewegung versetzbar sind. An zumindest einer der Rotorkomponenten ist zumindest eine elektrisch betreibbare Funktionskomponente angeordnet. Diese bildet in einem Betriebszustand insbesondere einen elektrischen Verbraucher. Die Funktionskomponente ist elektrisch mit der Induktionsspuleneinrichtung der Energieerzeugungsvorrichtung des Taumelscheibensystems verbunden. Die Energieerzeugungsvorrichtung stellt demnach eine elektrische Energieversorgung für die Funktionskomponente bereit. Da die Induktionsspuleneinrichtung an der rotierenden zweiten Scheibe angeordnet ist, kann die elektrische Verbindung zwischen der Funktionskomponente und der Energieerzeugungsvorrichtung auf einfache Weise und mit hoher Ausfallsicherheit realisiert werden. Auch tritt kein Energieverlust durch die Übertragung von elektrischer Energie von dem stationären in den rotierenden Teil auf, da die elektrische Energie direkt im rotierenden Teil der Taumelscheibe erzeugt wird.

Die kinematische Kopplung kann insbesondere durch eine drehfeste Verbindung zwischen Rotorschaft und zweiter Scheibe realisiert sein.

Gemäß einer bevorzugten Ausführungsform ist die zumindest eine elektrisch betreibbare Funktionskomponente als eine Sensoreinrichtung zum Erfassen einer Messgröße, eine Beleuchtungseinrichtung oder dergleichen ausgebildet. Die Funktionskomponenten können in vorteilhafter Weise Messaufgaben an den Rotorkomponenten übernehmen. Mit einer Beleuchtungseinrichtung kann beispielsweise die eine Rotorblattspitzenbeleuchtung realisiert werden, wodurch dem Piloten des Helikopters die Möglichkeit zur Sichtkontrolle der Rotorblattspitzenposition ermöglicht oder erleichtert wird.

Die Funktionskomponenten können insbesondere an eine einem Rumpf des Helikopters zugeordnete Steuerungseinrichtung funktional gekoppelt sein, beispielsweise mittels einer drahtlosen Kommunikationseinrichtung. Auf diese Weise kann eine Signal- oder Datenübertragung zwischen der Steuerungseinrichtung und den Funktionskomponenten vorteilhaft realisiert werden.

Bevorzugt ist die zumindest eine der Rotorkomponenten als ein Rotorblatt ausgebildet. Damit wird durch das Taumelscheibensystem die vorteilhafte Möglichkeit zur Versorgung von in den Rotorblättern integrierten elektrischen Systemen geschaffen.

Das Rotorsystem kann weiterhin insbesondere auch Rotorkomponenten in Form von an die Taumelscheibe gekoppelten Aktuatoren umfassen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner oder gleich 45 Grad, bevorzugt kleiner oder gleich 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine schematische Darstellung eines Rotorsystems gemäß einem bevorzugten Ausführungsbeispiel der vorliegenden Erfindung;
- Fig. 2: eine schematische Darstellung eines Taumelscheibensystems gemäß einem bevorzugten Ausführungsbeispiel der vorliegenden Erfindung;
- Fig. 3: eine schematische Darstellung eines Taumelscheibensystems gemäß einem weiteren Ausführungsbeispiel der vorliegenden Erfindung;
- Fig. 4: eine vergrößert dargestellte Schnittansicht einer Energieerzeugungsvorrichtung des Taumelscheibensystems gemäß einem bevorzugten Ausführungsbeispiel der vorliegenden Erfindung, wobei die Detailansicht beispielhaft als Detailansicht des durch den Buchstaben Z gekennzeichneten Bereichs des in der Fig. 2 gezeigten Taumelscheibensystems dargestellt ist;
- Fig. 5: eine Draufsicht auf eine Induktionsspuleneinrichtung der Energieversorgungsvorrichtung gemäß dem in Fig. 4 gezeigten Ausführungsbeispiel, wobei sich die Draufsicht aufgrund der in Fig. 4 gekennzeichneten Blickrichtung B ergibt;
- Fig. 6: eine vergrößert dargestellte Schnittansicht der Induktionsspuleneinrichtung der Energieerzeugungsvorrichtung des Taumelscheibensystems gemäß einem weiteren Ausführungsbeispiel der vorliegenden Erfindung, wobei die Detailansicht beispielhaft als Detailansicht des durch den Buchstaben Z gekennzeichneten Bereichs des in der Fig. 2 gezeigten Taumelscheibensystems dargestellt ist;
- Fig. 7: eine Draufsicht auf die Induktionsspuleneinrichtung der Energieversorgungsvorrichtung gemäß dem in Fig. 6 gezeigten Ausführungsbeispiel, wobei sich die Draufsicht aufgrund der in Fig. 4 gekennzeichneten Blickrichtung C ergib;
- Fig. 8: eine vergrößert dargestellte Schnittansicht der Induktionsspuleneinrichtung der Energieerzeugungsvorrichtung des Taumelscheibensystems gemäß einem weiteren Ausführungsbeispiel der vorliegenden Erfindung, wobei die Detailansicht beispielhaft als Detailansicht des durch den Buchstaben Z gekennzeichneten Bereichs des in der Fig. 2 gezeigten Taumelscheibensystems dargestellt ist; und
- Fig. 9: eine vergrößert dargestellte Schnittansicht einer Magneteinrichtung der Energieerzeugungsvorrichtung des Taumelscheibensystems gemäß einem weiteren Ausführungsbeispiel der vorliegenden Erfindung, wobei die Detailansicht beispielhaft als Detailansicht des durch den Buchstaben Z gekennzeichneten Bereichs des in der Fig. 2 gezeigten Taumelscheibensystems dargestellt ist.

In den Figuren bezeichnen dieselben Bezugszeichen gleiche oder funktionsgleiche Komponenten, soweit nichts Gegenteiliges angegeben ist.

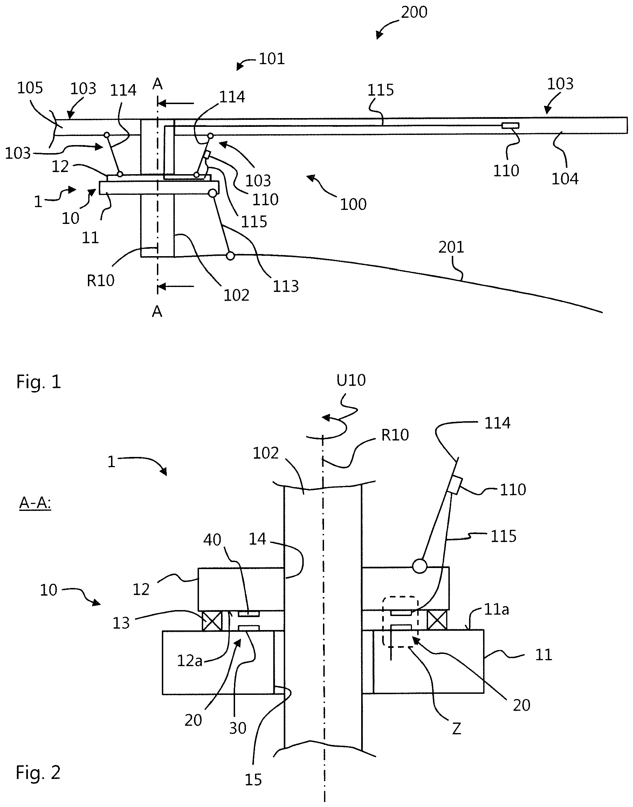

Fig. 1 zeigt schematisch und beispielhaft ein Rotorsystem 100 für einen Helikopter 200. Das Rotorsystem 100 weist ein Taumelscheibensystem 1, einen Rotor 101 mit einem um eine Rotationsachse R10 rotierbaren Rotorschaft 102 und mehreren mit dem Rotorschaft 102 rotierenden Rotorkomponenten 103 sowie zumindest eine elektrisch betreibbare Funktionskomponente 110 auf.

Das Taumelscheibensystem 1 weist eine Taumelscheibe 10 mit einer ersten Scheibe 11 und eine um eine Rotationsachse R10 drehbar an der ersten Scheibe 11 gelagerte zweite Scheibe 12 sowie eine im Folgenden noch genauer beschriebene Energieerzeugungsvorrichtung 20 auf (in Fig. 1 nicht dargestellt). Die zweite Scheibe 12 der Taumelscheibe 10 ist mit dem Rotorschaft 102 mitrotierend verbunden. Wie in Fig. 1 schematisch dargestellt ist, ist die erste Scheibe 11 mittels zumindest eines ersten Aktuators 113 an eine Rumpfstruktur 201 des Helikopters 200 koppelbar. Weiterhin kann die zweite Scheibe 12 mittels zumindest einem zweiten Aktuator 114 an Rotorblätter 104, 105 des Rotors 101 gekoppelt sein. Durch Betätigung der Aktuatoren 113, 114 sind insbesondere Anstellwinkel der Rotorblätter 103 einstellbar. Die Rotorblätter 104, 105 sowie die zweiten Aktuatoren 114 bilden jeweils Rotorkomponenten 103 des Rotors 101 des Rotorsystems 100.

Wie in Fig. 1 schematisch dargestellt, sind die elektrischen Funktionskomponenten 110 an den rotierbaren Rotorkomponenten 103 angeordnet. Gemäß der beispielhaften Darstellung in Fig. 1 ist eine elektrische Funktionskomponente 103 an dem Rotorblatt 104 und eine weitere elektrische Funktionskomponente 110 an einem der zweiten Aktuatoren 114 angeordnet. Die elektrisch betreibbaren Funktionskomponenten 110 sind elektrisch mit Energieerzeugungsvorrichtung 20 des Taumelscheibensystems 1 verbunden. Die elektrische Verbindung ist in Fig. 1 schematisch durch eine Verkabelung 115 dargestellt. Diese kann insbesondere wie in Fig. 1 zur Versorgung von in den Rotorblättern 104, 105 vorgesehenen Funktionskomponenten 110 innerhalb des Querschnitts des Rotorschafts 102 und der Rotorblätter 104 verlaufen. Auch kann vorgesehen sein, dass diese außerhalb des Querschnitts verläuft, wie in Fig. 1 beispielhaft für die Versorgung der an dem zweiten Aktuator 110 angeordneten Funktionskomponente 110 gezeigt ist.

Fig. 2 zeigt beispielhaft eine schematische Darstellung einer Schnittansicht gemäß der in Fig. 1 gezeigten Schnittlinie A-A des Taumelscheibensystems 1. Das Taumelscheibensystem 1 weist die Taumelscheibe 10 mit der ersten Scheibe 11 und der zweiten Scheibe 12 sowie die Energieerzeugungsvorrichtung 20 auf.

Wie in Fig. 2 gezeigt ist, ist die zweite Scheibe 12 um die Rotationsachse R10 drehbar an der ersten Scheibe 11 gelagert. Hierzu kann zwischen der ersten und der zweiten Scheibe 11, 12 ein Lager 13, z.B. in Form eines Wälzlagers, vorgesehen sein, wie dies schematisch in Fig. 2 dargestellt ist. Das Lager 13 zwischen einer ersten Oberfläche 11a der ersten Scheibe 11 und einer dieser zugewandten zweiten Oberfläche 12a der zweiten Scheibe 12 angeordnet. In Fig. 2 sind die erste und die zweite Oberfläche 11a, 12a jeweils durch parallel zueinander verlaufende Hauptflächen der ersten und der zweiten Scheibe 11, 12 gebildet. Die erste Scheibe 11 bildet einen stationären Teil der Taumelscheibe 10 und die zweite Scheibe 12 einen rotierenden Teil der Taumelscheibe 10. Bevorzugt sind die Scheiben 11, 12 jeweils kreisförmig ausgeführt.

Fig. 2 zeigt das Taumelscheibensystem 1 in einem in das Rotorsystem 100 integrierten Zustand. Hierbei ist die zweite Scheibe 12 kinematisch an den Rotorschaft 102 gekoppelt. Fig. 2 zeigt beispielhaft eine kinematische Kopplung der zweiten Scheibe 12 an den Rotorschaft 102. Hierbei weist die zweite Scheibe 12 eine Ausnehmung 14 auf, durch welche der Rotorschaft 102 hindurchragt. Insbesondere weist der Rotorschaft 102 ein Übermaß gegenüber der Ausnehmung 14 derart auf, dass die zweite Scheibe 12 kraftschlüssig mit dem Rotorschaft 102 verbunden ist. Zusätzlich oder alternativ können die zweite Scheibe 12 und der Rotorschaft 102 auch miteinander verschweißt, verklebt, verschraubt oder auf ähnliche Weise miteinander verbunden sein. Die erste Scheibe 11 weist bevorzugt ebenfalls eine Ausnehmung 15 auf, durch welche hindurch sich der Rotorschaft 102 im montierten Zustand des Rotorsystems 100 erstreckt.

Fig. 2 zeigt weiterhin die Energieerzeugungsvorrichtung 20 des Taumelscheibensystems 1. Die Energieerzeugungsvorrichtung 20 weist zumindest eine an der ersten Oberfläche 11a der ersten Scheibe 11 angeordnete und als Dünnschichtbauelement, gedrucktes elektronisches Bauelement oder als Siebdruckbauelement ausgeführte Magneteinrichtung 30 und zumindest eine an der zweiten Oberfläche 12a der zweiten Scheibe 12 angeordnete und als Dünnschichtbauelement, gedrucktes elektronisches Bauelement oder als Siebdruckbauelement ausgeführte Induktionsspuleneinrichtung 40 auf. In Fig. 2 sind beispielhaft zwei Energieerzeugungsvorrichtungen 20 dargestellt, welche in einer Umfangsrichtung U10 der Taumelscheibe 10 zueinander beabstandet angeordnet sind. In Fig. 2 ist schematisch weiterhin eine elektrische Verbindung der Induktionsspuleneinrichtung 20 mit einer an dem zweiten Aktuator 114 angeordneten elektrischen Funktionskomponente 110 mittels Verkabelung 115 dargestellt.

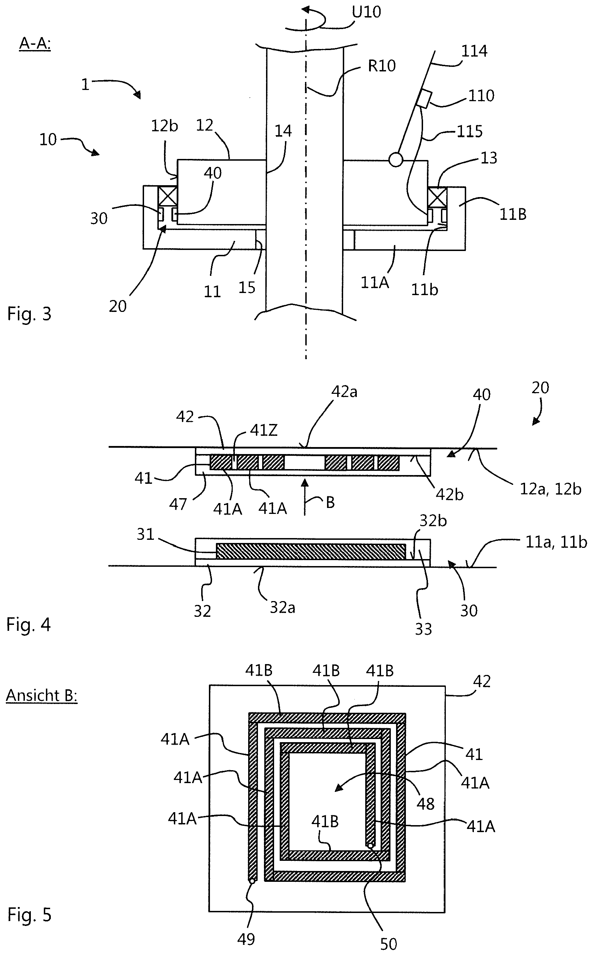

Fig. 3 zeigt beispielhaft eine alternative Gestaltung der Taumelscheibe 10. Im Unterschied zu der in Fig. 2 gezeigten Gestaltung ist hierbei die erste Scheibe 11 als schalenförmiger Körper mit einem kreisförmigen Hauptkörper 11A und einer sich in der Umfangsrichtung U10 erstreckenden Rahmenwandung 11B ausgeführt. Die erste Oberfläche der erste Scheibe 11 ist hierbei durch eine Innenumfangsfläche der Rahmenwandung 11B ausgebildet und durch das Bezugszeichen 11b gekennzeichnet. Eine Außenumfangsfläche der zweiten Scheibe 12 bildet die zweite Oberfläche 12b der zweiten Scheibe 12. Die erste und die zweite Oberfläche 11b, 12b sind einander zugewandt gelegen. Insbesondere ist das Lager 13 zwischen der ersten Oberfläche 11b der ersten Scheibe 11 und der zweiten Oberfläche 12b der zweiten Scheibe 12 angeordnet.

Fig. 3 zeigt weiterhin eine mögliche Anordnung der Energieerzeugungsvorrichtung 20. Insbesondere ist die Magneteinrichtung 30 an der ersten Oberfläche 11b der stationären erste Scheibe 11 und die Induktionsspuleneinrichtung 40 an der zweiten Oberfläche 12b der zweiten Scheibe 12 angeordnet. Selbstverständlich kann die Energieerzeugungsvorrichtung 20 auch bei der in Fig. 3 gezeigten Gestaltung der ersten und der zweiten Scheibe 11, 12 an den jeweiligen Hauptflächen der Scheiben 11, 12 vorgesehen sein, wie anhand der Fig. 2 beschrieben wurde.

Weiterhin kann auch vorgesehen sein, dass die zweite Scheibe 12 mit einem Hauptkörper und einer von dieser abstehenden Rahmenwandung, wie dies in Fig. 3 beispielhaft für die erste Scheibe 11 dargestellt ist, und die erste Scheibe 11 als ebene Scheibe ausgebildet ist, wie dies in Fig. 3 beispielhaft für die zweite Scheibe 12 dargestellt ist.

Fig. 4 zeigt beispielhaft eine bevorzugte Gestaltung der Energieerzeugungsvorrichtung 20. Die zumindest eine Induktionsspuleneinrichtung 40 weist hierbei eine Spulenleiterbahn 41 und eine erste Isolationsschicht 42 auf. Die Magneteinrichtung 30 ist als eine Permanentmagnetschicht 31 ausgeführt. In Fig. 3 sind weiterhin eine optionale Induktionsspulen-Schutzschicht 47, eine optional vorgesehene Magnetisolationsschicht 32 und eine ebenfalls optionale Magnetschutzschicht 33 gezeigt.

Wie in Fig. 4 gezeigt ist, ist die erste Isolationsschicht 42 zwischen der Spulenleiterbahn 41 und der zweiten Oberfläche 12a, 12b der zweiten Scheibe 12 angeordnet. Insbesondere liegt die erste Isolationsschicht 42 mit einer ersten Oberfläche 42a an der zweiten Oberfläche 12a, 12b der zweiten Scheibe 12 an. Die Spulenleiterbahn 41 kann insbesondere an einer entgegengesetzt zu der ersten Oberfläche 42a der ersten Isolationsschicht 42 anliegen bzw. ausgebildet sein, wie dies in Fig. 4 gezeigt ist. Die erste Isolationsschicht 42 kann insbesondere einen Träger für die Spulenleiterbahn 41 ausbilden, sodass die Induktionsspuleneinrichtung 40 als Ganzes an der zweiten Oberfläche 12a, 12b der zweiten Scheibe 12 befestigt werden kann, beispielsweise durch Verklebung oder Verschraubung mit dieser. Auch kann die erste Isolationsschicht 42 direkt auf der zweiten Oberfläche 12a, 12b und anschließend die Spulenleiterbahn auf der ersten Oberfläche 42a der ersten Isolationsschicht 42 ausgebildet werden, beispielsweise mittels eines Siebdruckverfahrens. Die optionale Induktionsspulen-Schutzschicht 47 bettet die Spulenleiterbahn 41 ein bzw. kapselt diese. Die Induktionsspulen-Schutzschicht 47 füllt bevorzugt auch zwischen benachbarten Leiterbahnabschnitten 41A, 41B, 41C erstreckende Zwischenräume 41Z aus.

Die optionale Magnetisolationsschicht 32 der Magneteinrichtung 30 ist zwischen der ersten Oberfläche 11a, 11b der ersten Scheibe 11 und der Permanentmagnetschicht 31 angeordnet. Insbesondere liegt die Magnetisolationsschicht 32 mit einer ersten Oberfläche 32a an der ersten Oberfläche 11a, 11b der ersten Scheibe 11 an. Die Permanentmagnetschicht 31 liegt an einer entgegengesetzt zu der ersten Oberfläche 32a der Magnetisolationsschicht 32 gelegenen zweiten Oberfläche 32b der Magnetisolationsschicht 32 an bzw. ist an dieser ausgebildet, wie dies in Fig. 4 gezeigt ist. Die Magnetisolationsschicht 32 kann insbesondere einen Träger für die Permanentmagnetschicht 31 ausbilden, sodass die Magneteinrichtung als Ganzes an der ersten Oberfläche 11a, 11b der ersten Scheibe 11 befestigt werden kann, beispielsweise durch Verklebung oder Verschraubung mit dieser. Auch kann die Magnetisolationsschicht 32 direkt auf der ersten Oberfläche 11a, 11b und anschließend die Permanentmagnetschicht 31 auf der Magnetisolationsschicht 32 ausgebildet werden, beispielsweise mittels eines Siebdruckverfahrens.

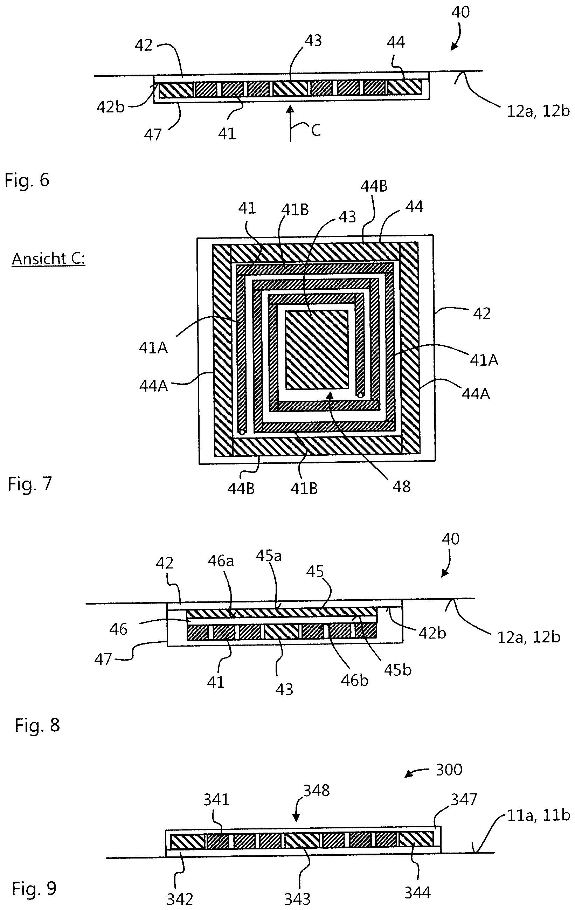

Die Spulenleiterbahn 41 erstreckt sich bevorzugt in einem spiralförmigen Muster entlang der ersten Isolationsschicht 42. Dies ist schematisch in Fig. 5 gezeigt. Insbesondere verläuft die Spulenleiterbahn 41 durchgehend zwischen einem ersten elektrischen Anschlusspunkt 49 und einem zweiten elektrischen Anschlusspunkt 50. Das spiralförmige Muster kann insbesondere wie in den Fig. 5 und 7 beispielhaft dargestellt durch einzelne, zueinander beabstandete und elektrisch voneinander isolierte erste Spulenleiterbahnabschnitte 41A und sich quer zu diesen erstreckende, zueinander beabstandete und elektrisch voneinander isolierte zweite Spulenleiterbahnabschnitte 41B gebildet sein, wobei die ersten und die zweiten Spulenleiterbahnabschnitte 41A, 41B gemeinsam ein Zentrum 48 umgrenzen. Das Zentrum 48 ist somit durch einen zwischen gegenüberliegenden ersten Spulenleiterbahn-Abschnitten 41A und einander gegenüberliegenden zweiten Spulenleiterbahn-Abschnitten 41A ausgebildeten Freiraum definiert.

Die Fig. 6 und 7 zeigen eine weitere vorteilhafte Gestaltung der Induktionsspuleneinrichtung 40. Im Unterschied zu der in Fig. 4 gezeigten Induktionsspuleneinrichtung 40 weist die Induktionsspuleneinrichtung 40 gemäß den Fig. 6 und 7 zusätzlich eine im Zentrum 48 des spiralförmigen Musters angeordnete erste Ferritkernschicht 43 auf. Dies dient der Vergrößerung der Induktivität der Spule. Die erste Ferritkernschicht 43 liegt insbesondere an der zweiten Oberfläche 42a der ersten Isolationsschicht 42 an.

In den Fig. 6 und 7 ist weiterhin eine alternativ oder zusätzlich zu der erste Ferritkernschicht 43 vorgesehene zweite Ferritkernbahn 44 dargestellt. Diese umschließt die Spulenleiterbahn 41. Wie in Fig. 6 gezeigt ist, liegt die zweite Ferritkernbahn 44 insbesondere an der zweiten Oberfläche 42a der ersten Isolationsschicht 42 an. In Fig. 7 ist beispielhaft der Verlauf der zweiten Ferritkernbahn 44 dargestellt. Diese erstreckt sich demnach insbesondere in einer Umfangsrichtung als geschlossene Bahn um die Spulenleiterbahn 41 herum. Bevorzugt verlaufen die die zweie Ferritkernbahn 44 bildenden Abschnitte 44A, 44B jeweils entlang der Spulenleiterbahnabschnitt 41A, 41B, wie in Fig. 7 gezeigt ist. Gemäß dem in Fig. 7 beispielhaften gezeigten Verlauf der Spulenleiterbahn 41 bildet die zweite Ferritkernbahn 44 in Fig. 7 ein geschlossenes Rechteck aus.

In Fig. 8 ist beispielhaft eine Variante der Induktionsspuleneinrichtung 40 gezeigt, welche eine dritte Ferritkernschicht 45 und eine zweite Isolationsschicht 45 aufweist. Diese ist zwischen der Spulenleiterbahn 41 und der ersten Isolationsschicht 42 angeordnet. Die dritte Ferritkernschicht 45 kann insbesondere als eine sich flächig erstreckende, bevorzugt geschlossene, Schicht ausgebildet sein, wie dies beispielhaft in Fig. 8 gezeigt ist. Die zweite Isolationsschicht 46 ist zwischen der dritten Ferritkernschicht 45 und der Spulenleiterbahn 41 angeordnet. Die dritte Ferritkernschicht 45 liegt mit einer ersten Oberfläche 45a an der zweiten Oberfläche 42b der ersten Isolationsschicht 42 an. Die zweite Isolationsschicht 46 liegt mit einer ersten Oberfläche 46a an einer zweiten Oberfläche 45b der dritten Ferritkernschicht 45 an, wobei die zweite Oberfläche 45b der dritten Ferritkernschicht 45 entgegengesetzt zu der ersten Oberfläche 45a der dritten Ferritkernschicht 45 orientiert ist. Im Unterschied zu den in den Fig. 4 bis 7 gezeigten Induktionsspuleneinrichtungen 40 liegt die Spulenleiterbahn 41 der in Fig. 8 beispielhaft gezeigten Induktionsspuleneinrichtung 40 an einer entgegengesetzt zu der ersten Oberfläche 46a der zweiten Isolationsschicht 46 gelegenen zweiten Oberfläche 46b der zweiten Isolationsschicht 46 an.

Die optionale Induktionsspulen-Schutzschicht 47 bettet neben der Spulenleiterbahn 41 generell auch die optionale erste Ferritkernschicht 43, die optionale zweite Ferritkernbahn sowie die optionale dritte Ferritkernschicht ein, wie schematisch in den Fig. 6 und 8 dargestellt ist.

Alternativ zu der in Fig. 4 beispielhaft gezeigten Magneteinrichtung 30 kann eine Magneteinrichtung vorgesehen sein, welche als eine auf die voranstehend beschriebene Induktionsspuleneinrichtung ausgeführt ist. Fig. 9 zeigt beispielhaft eine analog zu der in Fig. 6 gezeigten Induktionsspuleneinrichtung 40 ausgebildete Magneteinrichtung 300 der Energieerzeugungsvorrichtung 20.

Die Magneteinrichtung 300 weist hierbei insbesondere eine Magnetspulenleiterbahn 341 und eine zwischen der Magnetspulenleiterbahn 341 und der ersten Oberfläche 11a, 11b der ersten Scheibe 11 gelegene erste Magnetisolationsschicht 342 auf. Die Magnetisolationsschicht 342 kann insbesondere einen Träger für die Magnetspulenleiterbahn 341 ausbilden, sodass die Magnetspulenleiterbahn 341 als Ganzes an der ersten Scheibe 11 befestigt werden kann. Bevorzugt erstreckt sich die Magnetspulenleiterbahn 341 in einem spiralförmigen Muster entlang der ersten Magnetisolationsschicht 342. Vorteilhaft kann im Zentrum 348 des spiralförmigen Musters eine erste Magnet-Ferritkernschicht 343 angeordnet sein, wie in Fig. 9 beispielhaft gezeigt ist. Wie Fig. 9 weiterhin zeigt kann alternativ oder zusätzlich vorgesehen sein, dass die Magneteinrichtung 300 eine die Magnetspulenleiterbahn 341 umschließende zweite Magnet-Ferritkernbahn 344 aufweist. Auch kann vorgesehen sein, dass die Magneteinrichtung 300 eine sich zwischen der Magnetspulenleiterbahn 341 und der ersten Magnet-Isolationsschicht 342 erstreckende dritte Magnet-Ferritkernschicht 345 aufweist, wobei zwischen der dritten Magnet-Ferritkernschicht 345 und der Magnetspulenleiterbahn 341 eine zweite Magnetisolationsschicht 346 angeordnet ist (nicht gezeigt). Weiterhin kann eine Magnetschutzschicht 347 analog zu der Schutzschicht 47 der Induktionsspuleneinrichtung 40 vorhanden sein, wie schematisch in Fig. 9 gezeigt ist.

Die Magnetspulenleiterbahn 341 der Magneteinrichtung 300 kann durch eine elektrische Spannungsquelle (nicht dargestellt) mit elektrischer Energie versorgt werden und bildet dadurch einen stromdurchflossenen Leiter. Auf diese Weise bildet sich ein Magnetfeld um die Magnetspulenleiterbahn 341. Wird die Induktionsspuleneinrichtung 40 durch die Rotation der zweiten Scheibe 12 durch dieses Magnetfeld hindurchbewegt, induziert das Magnetfeld eine Spannung in die Induktionsspuleneinrichtung 40.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar sofern vom Gegenstand der nachfolgenden Ansprüche nicht abgewichen wird.

### BEZUGSZEICHENLISTE

- 1: Taumelscheibensystem
- 10: Taumelscheibe
- 11: erste Scheibe
- 11A: Hauptkörper der ersten Scheibe
- 11B: Rahmenwandung der ersten Scheibe
- 11a; 11b: erste Oberfläche der ersten Scheibe
- 12: zweite Scheibe
- 12a; 12b: zweite Oberfläche der zweiten Scheibe
- 13: Lager
- 14: Ausnehmung der zweiten Scheibe
- 15: Ausnehmung der ersten Scheibe
- 20: Energieerzeugungsvorrichtung
- 30, 300: Magneteinrichtung
- 31: Permanentmagnetschicht
- 32: Magnetisolationsschicht
- 32a: erste Oberfläche der Magnetisolationsschicht
- 32b: zweite Oberfläche der Magnetisolationsschicht
- 33: Magnetschutzschicht
- 40: Induktionsspuleneinrichtung
- 41: Spulenleiterbahn
- 41A: erster Spulenleiterbahnabschnitt
- 41B: zweiter Spulenleiterbahnabschnitt
- 41Z: Zwischenraum
- 42: erste Isolationsschicht
- 42a: erste Oberfläche der ersten Isolationsschicht
- 42b: zweite Oberfläche der ersten Isolationsschicht
- 43: erste Ferritkernschicht
- 44: zweite Ferritkernbahn
- 44A: Abschnitt der zweiten Ferritkernbahn
- 44B: Abschnitt der zweiten Ferritkernbahn
- 45: dritte Ferritkernschicht
- 45a: erste Oberfläche der dritten Ferritkernschicht
- 45b: zweite Oberfläche der dritten Ferritkernschicht
- 46: zweite Isolationsschicht
- 46a: erste Oberfläche der zweiten Isolationsschicht
- 46b: zweite Oberfläche der zweiten Isolationsschicht
- 47: Induktionsspulen-Schutzschicht
- 48: Zentrum
- 49: erster elektrischer Anschlusspunkt
- 50: zweiter elektrischer Anschlusspunkt
- 100: Rotorsystem
- 101: Rotor
- 102: Rotorschaft
- 103: Rotorkomponenten
- 104; 105: Rotorblätter
- 110: Funktionskomponente
- 113: erster Aktuator
- 114: zweiter Aktuator
- 115: Verkabelung
- 200: Helikopter
- 201: Rumpfstruktur des Helikopters
- 341: Magnetspulenleiterbahn
- 342: erste Magnetisolationsschicht
- 343: erste Magnet-Ferritkernschicht
- 344: zweite Magnet-Ferritkernbahn
- 345: dritte Magnet-Ferritkernschicht
- 346: zweite Magnetisolationsschicht
- 347: Magnetschutzschicht
- 348: Zentrum
- A: Schnittlinie
- B: Blickrichtung
- C: Blickrichtung
- R10: Rotationsachse
- U10: Umfangsrichtung der Taumelscheibe
- Z: Detail

## Patentansprüche

1. Taumelscheibensystem (1) für einen Helikopter (200) mit:
einer Taumelscheibe (10) mit einer ersten Scheibe (11) und einer um eine Rotationsachse (R10) drehbar an der ersten Scheibe (11) gelagerten zweiten Scheibe (12); und
einer Energieerzeugungsvorrichtung (20) mit zumindest einer an einer ersten Oberfläche (11a; 11b) der ersten Scheibe (11) angeordneten als direkt auf einen Träger aufgebrachte Schaltung ausgeführten Magneteinrichtung (30) und zumindest einer an einer der ersten Oberfläche (11a; 11b) der ersten Scheibe (11) zugewandten zweiten Oberfläche (12a; 12b) der zweiten Scheibe (12) angeordneten und als direkt auf einen Träger aufgebrachte Schaltung ausgeführte Induktionsspuleneinrichtung (40),
wobei die zumindest eine Induktionsspuleneinrichtung (40) eine Spulenleiterbahn (41) und eine zwischen der Spulenleiterbahn (41) und der zweiten Oberfläche (12a; 12b) der zweiten Scheibe (12) gelegene erste Isolationsschicht (42) als Träger aufweist.

2. Taumelscheibensystem (1) nach Anspruch 1, wobei sich die Spulenleiterbahn (41) in einem spiralförmigen Muster entlang der ersten Isolationsschicht (42) erstreckt.

3. Taumelscheibensystem (1) nach Anspruch 1 oder 2, wobei die Induktionsspuleneinrichtung (40) eine im Zentrum (48) des spiralförmigen Musters angeordnete Ferritkernschicht (43) aufweist.

4. Taumelscheibensystem (1) nach einem der voranstehenden Ansprüche, wobei die Induktionsspuleneinrichtung (40) eine die Spulenleiterbahn (41) umschließende Ferritkernbahn (44) aufweist.

5. Taumelscheibensystem (1) nach einem der voranstehenden Ansprüche, wobei die Induktionsspuleneinrichtung (40) eine zwischen der Spulenleiterbahn (41) und der ersten Isolationsschicht (42) angeordnete Ferritkernschicht (45) aufweist, wobei zwischen dieser Ferritkernschicht (45) und der Spulenleiterbahn (41) eine zweite Isolationsschicht (46) angeordnet ist.

6. Taumelscheibensystem (1) nach einem der voranstehenden Ansprüche, wobei die Spulenleiterbahn (41) durch ein CVD-Verfahren oder ein PVD-Verfahren oder ein auftragendes Druckverfahren hergestellt ist.

7. Taumelscheibensystem (1) nach einem der voranstehenden Ansprüche, wobei die Induktionsspuleneinrichtung (40) eine die Spulenleiterbahn (41) einbettende Induktionsspulen-Schutzschicht (47) aufweist.

8. Taumelscheibensystem (1) nach einem der voranstehenden Ansprüche, wobei die Magneteinrichtung (30) eine Permanentmagnetschicht (31) aufweist.

9. Taumelscheibensystem (1) nach Anspruch 8, wobei die Magneteinrichtung (30) eine zwischen der ersten Oberfläche (11a; 11b) der ersten Scheibe (11) und der Permanentmagnetschicht (31) angeordnete Magnetisolationsschicht (32) als Träger aufweist.

10. Taumelscheibensystem (1) nach Anspruch 8 oder 9, wobei die Permanentmagnetschicht (31) durch ein CVD-Verfahren oder ein PVD-Verfahren oder ein auftragendes Druckverfahren hergestellt ist.

11. Taumelscheibensystem (1) nach einem der Ansprüche 1 bis 7, wobei die Magneteinrichtung (30) als eine Induktionsspuleneinrichtung (40) gemäß einem der Ansprüche 1 bis 7 ausgebildet ist.

12. Rotorsystem (100) für einen Helikopter (200) mit:
einem Taumelscheibensystem (1) nach einem der voranstehenden Ansprüche;
einem um die Rotationsachse (R10) rotierbaren Rotorschaft (102), wobei die zweite Scheibe (12) der Taumelscheibe (10) des Taumelscheibensystems (1) mit dem Rotorschaft (102) mitrotierend verbunden ist;
mehreren mit dem Rotorschaft (102) rotierenden Rotorkomponenten (103); und
zumindest einer an einer der Rotorkomponenten (103) angeordneten und elektrisch betreibbaren Funktionskomponente (110), welche elektrisch mit der Induktionsspuleneinrichtung (40) des Taumelscheibensystems (1) verbunden ist.

13. Rotorsystem (100) nach Anspruch 12, wobei die elektrisch betreibbare Funktionskomponente (110) als eine Sensoreinrichtung zum Erfassen einer Messgröße, eine Beleuchtungseinrichtung oder dergleichen ausgebildet ist.

14. Rotorsystem (100) nach Anspruch 12 oder 13, wobei zumindest eine der Rotorkomponenten (103) als ein Rotorblatt (104; 105) ausgebildet ist.

## Claims

1. Swashplate system (1) for a helicopter (200), comprising:
a swashplate (10) having a first plate (11) and a second plate (12) which is mounted on the first plate (11) so as to be rotatable about a rotation axis (R10); and
an energy-generating apparatus (20) having at least one magnetic device (30) which is arranged on a first surface (11a; 11b) of the first plate (11) and is designed as a circuit applied directly onto a carrier, and at least one induction coil device (40) which is arranged on a second surface (12a; 12b) of the second plate (12) that faces the first surface (11a; 11b) of the first plate (11) and is designed as a circuit applied directly onto a carrier,
wherein the at least one induction coil device (40) has a coil strip conductor (41) and a first insulating layer (42), which is placed between the coil strip conductor (41) and the second surface (12a; 12b) of the second plate (12), as carrier.

2. Swashplate system (1) according to Claim 1, wherein the coil strip conductor (41) extends in a spiral pattern along the first insulating layer (42).

3. Swashplate system (1) according to Claim 1 or 2, wherein the induction coil device (40) has a ferrite core layer (43) arranged in the centre (48) of the spiral pattern.

4. Swashplate system (1) according to one of the preceding claims, wherein the induction coil device (40) has a ferrite core track (44) surrounding the coil strip conductor (41).

5. Swashplate system (1) according to one of the preceding claims, wherein the induction coil device (40) has a ferrite core layer (45) arranged between the coil strip conductor (41) and the first insulating layer (42), wherein a second insulating layer (46) is arranged between said ferrite core layer (45) and the coil strip conductor (41).

6. Swashplate system (1) according to one of the preceding claims, wherein the coil strip conductor (41) is produced by a CVD method or a PVD method or an additive printing method.

7. Swashplate system (1) according to one of the preceding claims, wherein the induction coil device (40) has an induction-coil protective layer (47) embedding the coil strip conductor (41).

8. Swashplate system (1) according to one of the preceding claims, wherein the magnetic device (30) has a permanent-magnet layer (31).

9. Swashplate system (1) according to Claim 8, wherein the magnetic device (30) has a magnetinsulating layer (32), which is arranged between the first surface (11a, 11b) of the first plate (11) and the permanent-magnet layer (31), as carrier.

10. Swashplate system (1) according to Claim 8 or 9, wherein the permanent-magnet layer (31) is produced by a CVD method or a PVD method or an additive printing method.

11. Swashplate system (1) according to one of Claims 1 to 7, wherein the magnetic device (30) is designed as an induction coil device (40) according to one of Claims 1 to 7.

12. Rotor system (100) for a helicopter (200), comprising:
a swashplate system (1) according to one of the preceding claims;
a rotor shaft (102) which is rotatable about the rotation axis (R10), wherein the second plate (12) of the swashplate (10) of the swashplate system (1) is connected to the rotor shaft (102) for rotation therewith;
a plurality of rotor components (103) rotating with the rotor shaft (102); and
at least one electrically operable functional component (110) which is arranged on one of the rotor components (103) and is electrically connected to the innduction coil device (40) of the swashplate system (1).

13. Rotor system (100) according to Claim 12, wherein the electrically operable functional component (110) is designed as a sensor device for detecting a measurement variable, as an illuminating device or the like.

14. Rotor system (100) according to Claim 12 or 13, wherein at least one of the rotor components (103) is designed as a rotor blade (104; 105).

## Revendications

1. Système à plateau cyclique (1) pour un hélicoptère (200) avec:
un plateau cyclique (10) avec un premier disque (11) et un second disque (12) monté sur le premier disque (11) d'une façon rotative autour d'un axe de rotation (R10); et
un dispositif de production d'énergie (20) avec au moins un dispositif magnétique (30) disposé sur une première surface (11a; 11b) du premier disque (11) et réalisé sous forme de circuit déposé directement sur un support et au moins un dispositif de bobine d'induction (40) disposé sur une deuxième surface (12a; 12b) du second disque (12) tournée vers la première surface (11a; 11b) du premier disque (11) et réalisé sous forme de circuit déposé directement sur un support,
dans lequel ledit au moins un dispositif de bobine d'induction (40) présente une piste conductrice de bobine (41) et comme support une première couche d'isolation (42) située entre la piste conductrice de bobine (41) et la deuxième surface (12a; 12b) du second disque (12).

2. Système à plateau cyclique (1) selon la revendication 1, dans lequel la piste conductrice de bobine (41) s'étend selon un motif en spirale le long de la première couche d'isolation (42).

3. Système à plateau cyclique (1) selon une revendication 1 ou 2, dans lequel le dispositif de bobine d'induction (40) présente une couche de noyau de ferrite (43) disposée au centre (48) du motif en spirale.

4. Système à plateau cyclique (1) selon l'une quelconque des revendications précédentes, dans lequel le dispositif de bobine d'induction (40) présente une piste de noyau de ferrite (44) encadrant la piste conductrice de bobine (41).

5. Système à plateau cyclique (1) selon l'une quelconque des revendications précédentes, dans lequel le dispositif de bobine d'induction (40) présente une couche de noyau de ferrite (45) disposée entre la piste conductrice de bobine (41) et la première couche d'isolation (42), dans lequel une deuxième couche d'isolation (46) est disposée entre cette couche de noyau de ferrite (45) et la piste conductrice de bobine (41).

6. Système à plateau cyclique (1) selon l'une quelconque des revendications précédentes, dans lequel la piste conductrice de bobine (41) est produite par un procédé CVD ou un procédé PVD ou un procédé d'impression par application.

7. Système à plateau cyclique (1) selon l'une quelconque des revendications précédentes, dans lequel le dispositif de bobine d'induction (40) présente une couche de protection de bobine d'induction (47) enrobant la piste conductrice de bobine (41).

8. Système à plateau cyclique (1) selon l'une quelconque des revendications précédentes, dans lequel le dispositif magnétique (30) présente une couche d'aimant permanent (31).

9. Système à plateau cyclique (1) selon la revendication 8, dans lequel le dispositif magnétique (30) présente comme support une couche d'isolation magnétique (32) disposée entre la première surface (11a; 11b) du premier disque (11) et la couche d'aimant permanent (31).

10. Système à plateau cyclique (1) selon une revendication 8 ou 9, dans lequel la couche d'aimant permanent (31) est produite par un procédé CVD ou un procédé PVD ou un procédé d'impression par application.

11. Système à plateau cyclique (1) selon l'une quelconque des revendications 1 à 7, dans lequel le dispositif magnétique (30) est réalisé sous la forme d'un dispositif de bobine d'induction (40) selon l'une quelconque des revendications 1 à 7.

12. Système de rotor (100) pour un hélicoptère (200) avec:
un système à plateau cyclique (1) selon l'une quelconque des revendications précédentes;
un arbre de rotor (102) pouvant tourner autour d'un axe de rotation (R10), dans lequel le second disque (12) du plateau cyclique (10) du système à plateau cyclique (1) est assemblé de façon entraînée en rotation à l'arbre de rotor (102);
plusieurs composants de rotor (103) tournant avec l'arbre de rotor (102); et
au moins un composant fonctionnel (110) disposé sur un des composants de rotor (103) et pouvant être actionné électriquement, qui est relié électriquement au dispositif de bobine d'induction (40) du système à plateau cyclique (1).

13. Système de rotor (100) selon la revendication 12, dans lequel le composant fonctionnel pouvant être actionné électriquement (110) est formé par un dispositif de capteur permettant de détecter une grandeur de mesure, un dispositif d'éclairage ou analogue.

14. Système de rotor (100) selon une revendication 12 ou 13, dans lequel au moins un des composants de rotor (103) est formé par une pale de rotor (104; 105).
